# EUROPEAN PATENT APPLICATION

(11) **EP 4 484 301 A1**
(43) Date of publication of application: **01.01.2025**
(21) Application number: 23182299.0
(22) Date of filing: 29.06.2023
(51) Int. Cl.: B64D 45/00, B64F 5/60, G07C 5/00, G08G 5/00, H04B 7/185, H04L 67/12

(54) **METHOD FOR SAFELY OPERATING AN AIRCRAFT**

(71) Applicant: Deutsche Telekom AG, 53113 Bonn (DE)
(72) Inventor: VAN DEN BERGE, Fridtjof, 53227 Bonn-Oberkassel (DE)
(74) Representative: RDL Patentanwälte PartG mbB

(57) **Abstract**

A method for safely operating an aircraft, a dedicated onboard monitoring device for an aircraft, an aircraft and a computer program product.

## Description

The invention relates to a method for safely operating an aircraft. The invention further relates to a dedicated onboard monitoring device for an aircraft, an aircraft and a computer program product.

An aircraft, e.g., an airplane or plane for short, usually comprises a plurality of onboard systems. An onboard system may adversely affect a safety of the aircraft or even cause an emergency situation of the aircraft when the onboard system deviates from a normal operation too much, i.e. becomes critical, during a flight of the aircraft.

Usually, an onboard system signals a critical state by activating a red light in a cockpit of the aircraft. The onboard system is monitored by a pilot of the aircraft who may react and take adequate measures when he recognizes the activated red light. However, the critical state signalled by the activated red light may indicate an already inescapable emergency situation requiring extreme measures to be taken by the pilot.

It is, therefore, an object of the invention, to suggest a method for safely operating an aircraft which allows for preventing an onboard system from causing an emergency situation for the aircraft. Further objects of the invention are to provide a dedicated onboard monitoring device for an aircraft, an aircraft and a computer program product.

One aspect of the invention is a method for safely operating an aircraft. An onboard system of the aircraft has to be monitored in order to recognize a critical state of the onboard system resulting in a critical state of the aircraft or even an emergency situation of the aircraft.

According to the invention, a dedicated onboard monitoring device of the aircraft generates a warning message and transmits the generated warning message to an onboard wireless communication unit of the aircraft during a flight of the aircraft, when a suspicious value of an operational parameter of the onboard system of the aircraft is detected, the generated warning message comprising a unique ID of the onboard system and the detected suspicious value of an operational parameter of the onboard system; the onboard wireless communication unit transmits the warning message to an external wireless communication unit using a determined wireless connection; the external wireless communication unit forwards the transmitted warning message to a terrestial supporting node; and the terrestial supporting node responds to the forwarded warning message depending on the forwarded warning message.

The onboard system may be configured to be an engine of the aircraft, e.g., a turbofan engine, a cabin of the aircraft, a landing gear of the aircraft, a wing of the aircraft, a tail unit of the aircraft, and the like. The operational parameter indicates an operational state of the onboard system. The operational parameter may indicate a temperature, e.g., a temperature of the air intake, a compression chamber, a combustion chamber, a high pressure turbine and an exhaust duct of the engine, or an air pressure, e.g., an air pressure of the cabin, a hydraulic pressure, e.g., a hydraulic pressure of the landing gear, and the like.

The unique ID is exclusively assigned to the onboard system and, hence, unambiguously identifies the onboard system. The unique ID may point to a complete technical specification of the onboard system and a complete history, e.g., a service history, of the onboard system.

The onboard wireless communication unit may comprise an in-flight connectivity, IFC, unit providing a WiFi access point within the airplane, a complementary ground component, CGC, unit for connecting to a ground cellular network, a digital service unit, DSU, and/or a mobile satellite service, MSS, unit for connecting to a communication satellite. Particularly, the Euopean Aviation Network, EAN, combines a high capacity satellite coverage with a complementary 4G Long Term Evolution, LTE, ground network to provide aircrafts with a high speed connectivity across the states of the European Union, EU, the United Kingdom, UK, Norway and Switzerland.

The term "external" specifying the external wireless communication unit indicates the external wireless communication unit to not form part of the aircraft. Accordingly, a wireless communication unit of a mobile device of a crew member is considered an external wireless communication unit although the mobile device is located within the aircraft. The external wireless communication unit may be comprised by a satellite, by a terrestrial cellular network or by a mobile device.

Particularly, the onboard wireless communication unit may provide the wireless connection both to a satellite system and to a terrestrial cellular network and even switch between both alternatives when one alternative does not provide a necessary quality of service, e.g. bitrate and/or latency.

In an embodiment, either the onboard system transmits a value of the operational parameter to the dedicated onboard monitoring device and the dedicated onboard monitoring device detects the transmitted value to be suspicious. Alternatively the onboard system may detect a value of the operational parameter to be suspicious and transmit the detected suspicious value to the dedicated onboard monitoring device. In the former case, the onboard system steadily, e.g., periodically, transmits each current value of the operational parameter and the onboard system assesses each transmitted current value. In the latter case, the onboard system assesses each current value and only transmits suspicious values.

Of course, the dedicated onboard monitoring device may simultaneously monitor a plurality of onboard systems of the aircraft, preferably each onboard system of the aircraft. Accordingly, the dedicated monitoring device may readily support and simultaneously carry out both alternatives with different onboard systems. Particularly, the dedicated onboard monitoring device may assess any combination of onboard systems and detect a combination of values of different operational parameters to be suspicious even if a single value is not detected to be suspicious.

Preferably, the warning message is forwarded to a server of a manufacturer of the aircraft, a server of a manufacturer of the onboard system and/or to a server of a determined air traffic control instance, ATC, as the terrestial supporting node. The manufacturer of the aircraft may learn a reliability of the onboard system from the warning message. The manufacturer of the onboard system may determine an error condition of the onboard system and provide a remedy healing the onboard system. The air traffic control instance may be automatically determined dependent on a geographical position of the aircraft. The determined air traffic control instance may immediately adapt a flight parameter, e.g., a flight route, a landing airport, a flight velocity, a flight height, of the aircraft to the suspicious state of the onboard system.

The wireless connection is advantageously determined to use a radio frequency appropriate for the determined air traffic control instance. The aircraft immediately connects to the competent air traffic control instance. As a consequence, unnecessary quick reaction alert, QRA, missions, i.e., starts of mostly two air defence interceptors, are reliably avoided saving high costs being imposed to an operator of the aircraft for each QRA mission.

Responding to the forwarded warning message may comprise remotely accessing the onboard system via the determined wireless connection or providing a crew member of the aircraft with information concerning the suspicious onboard system via the determined wireless connection. The suspicious onboard system may be remotely accessed and possibly reconfigured in order to return the suspicious value to normality. Alternatively or additionally the crew member is enabled by the provided information to reconfigure the onboard system or take any adequate measure in order to return the suspicious value to normality.

In an embodiment, the value is detected to be suspicious when the value is outside a predetermined safe range of normal values of the operational parameter and inside a predetermined non-critical range of abnormal values of the operational parameter, the non-critical range comprising the safe range. Each range may have a single boundary or two boundaries spaced apart. Each boundary may be considered a threshold the value may pass in either direction, i.e., fall below the threshold or exceed the threshold.

Advantageously, the generated warning message comprises a criticality score corresponding to a relevance of the detected suspicious value for a safety of the aircraft, the relevance depending on a type of the onboard system and a distance of the detected suspicious value from the predetermined safe range. The criticality score may vary, e.g., in a range from 1 to 10 wherein 1 indicates a critical value of the operational parameter having a maximum deviation from normal values of the operational parameter and 10 indicates a least suspicious value of the operational parameter having a minimum deviation from normal values of the operational parameter. The criticality score simplifies a comparison of different onboard systems and allows for relatively weighting a plurality of onboard systems in a combination of onboard systems.

Ranges for the criticality score may be defined and assigned to different measure categories, e.g., servicing the onboard system at the next scheduled airport, exchanging the onboard system within a predefined time interval, heading for a non-scheduled airport for performing an emergency landing and so forth.

Preferably, the dedicated onboard monitoring device generates the warning message according to a dedicated protocol. The dedicated protocol may be called a suspicious parameter in flight protocol, SPiFP for short, or a critical parameter in flight protocol, CPiFP for short. The dedicated protocol defines a format for each type of value or data to be transmitted and rules for composing the warning message and transmitting the warning message. Of course, the dedicated protocol supports a bidirectional communication between the aircraft and the terrestial supporting node.

Apart from that, the dedicated protocol may allow for tuning a radio frequency of the wireless connection appropriate for the determined air traffic control instance. Particularly, the competent air traffic control instance may transmit a corresponding tuning request to the onboard wireless communication unit of the aircraft. The onboard wireless communication unit automatically tunes the radio frequency of the wireless connection corresponding to the transmitted tuning request.

It is noted that using the dedicated protocol for automatically tuning the radio frequency of the wireless connection of the aircraft may be considered an invention on its own.

The generated warning message comprises flight data of the aircraft. The flight data provides a context of the suspicious value of the operational parameter. The context allows for assessing the suspicious value in greater detail and more precisely.

In an embodiment, the onboard wireless communication unit transmits the warning message at a higher priority than messages of passengers of the aircraft and/or via an exclusive radio channel.

The wireless connection may be determined to be a terrestial connection, a satellite connection or local WiFi connection. The satellite connection is applicable above a territory not providing ground communication units, e.g., an ocean or an inhabited territory. The terrestial connection is applicable above a territory providing ground communication units. The local WiFi connection is applicable for a mobile device being located within the plane.

The warning message may be transmitted to a mobile device located within the aircraft. The mobile device may be, e.g., a smartphone, a table, a notebook and the like. A member of the crew, particularly a pilot or a copilot controlling the aircraft, may use the mobile device.

Another aspect of the invention is an onboard monitoring device for an aircraft.

According to the invention, the onboard monitoring device is a dedicated onboard monitoring device configured to carry out a method according to an embodiment of the invention together with an onboard system of the aircraft, an onboard wireless communication unit of the aircraft, an external wireless communication unit and a terrestial supporting node. The dedicated onboard monitoring device is a central entity for monitoring a health of onboard systems of the aircraft and a health of the aircraft as a whole. The dedicated onboard monitoring device may be connected with each onboard system and the onboard wireless communication unit. The dedicated onboard monitoring device may be a computing device establishing a logical overlay structure within the aircraft. The logical overlay structure is only used for monitoring the onboard systems of the aircraft. Due to the dedicated onboard monitoring device an operation safety of the aircraft is increased. Apart from that, operating the aircraft may be more economical.

Still another aspect of the invention is an aircraft, comprising a plurality of onboard aircraft systems, an onboard wireless communication unit. Such aircrafts are very common. Hence, the invention is widely applicable.

According to the invention, the aircraft comprises a dedicated onboard monitoring device according to the invention separate from both each onboard aircraft system and the onboard wireless communication unit and connected to each onboard aircraft system and the onboard wireless communication unit. The dedicated onboard monitoring device increases an operation safety of the aircraft and allows for a more economic operation.

A fourth aspect of the invention is a computer program product, comprising a digital storage medium storing a program code. The digital storage medium comprises at least one of a compact disc, CD, a digital versatile disk, DVD, a universal serial bus, USB, stick, a random access memory, RAM, chip, a hard drive, HD, a cloud storage and the like.

According to the invention, the program code causes a computing device to carry out a method according to an embodiment of the invention as the dedicated onboard monitoring device when being executed by a processor of the computing device. The computer program product allows for enabling a computing device aboard an aircraft to participate in a method according to the invention and, thus, to increase an operation safety of the aircraft and to allow for a more economic operation of the aircraft.

An essential advantage of the inventive method is that the method allows for preventing an onboard system of an aircraft from causing an emergency situation for the aircraft. Carrying out the inventive method increases a safety of the aircraft during operation, i.e., in flight, and allows for a more economic operation of the aircraft, e.g., by preventing unnecessary and expensive quick reaction alert missions.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.

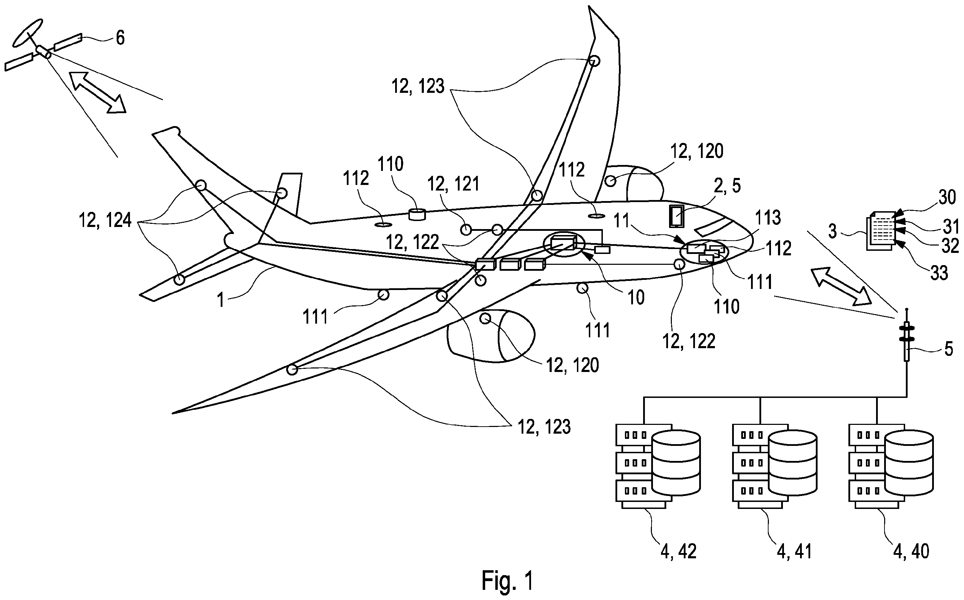

- Fig. 1: schematically shows an aircraft according to an embodiment of the invention.

Fig. 1 schematically shows an aircraft 1 according to an embodiment of the invention. The aircraft 1 comprises a plurality of onboard aircraft systems 12, e.g., an engine 120, a cabin 121, a landing gear 122, a wing 123 and/or a tail unit 124.

The aircraft 1 further comprises an onboard wireless communication unit 11. The onboard wireless communication unit 11 may comprise a mobile satellite service, MSS, unit 110, a complementary ground component, CGC, unit 111, a digital service unit, DSU, 113 and/or an in-flight connectivity, IFC, unit 112.

The aircraft 1 comprises a dedicated onboard monitoring device 10 according to an embodiment of the invention. The dedicated onboard monitoring device 10 is configured separate from both each onboard aircraft system 12 and the onboard wireless communication unit 11 and is connected to each onboard aircraft system 12 and the onboard wireless communication unit 11.

The dedicated onboard monitoring device 10 for an aircraft 1 is configured for carrying out a method according to an embodiment of the invention together with the onboard system 12 of the aircraft 1, the onboard wireless communication unit 11 of the aircraft 1, an external wireless communication unit 5 and a terrestial supporting node 4.

The dedicated monitoring device 10 may be implemented by means of a computer program product comprising a digital storage medium storing a program code. The program code causes a computing device to carry out the inventive method described below as the dedicated onboard monitoring device 10 when being executed by a processor of the computing device.

The following method is carried out for safely operating the aircraft 1.

The onboard system 12 may transmit a value of an operational parameter to the dedicated onboard monitoring device 10 and the dedicated onboard monitoring device 10 may detect the transmitted value to be suspicious. Alternatively, the onboard system 12 may detect a value of the operational parameter to be suspicious and transmit the detected suspicious value 31 to the dedicated onboard monitoring device 10.

The value 31 is preferably detected to be suspicious when the value is outside a predetermined safe range of normal values of the operational parameter and inside a predetermined non-critical range of abnormal values of the operational parameter, the non-critical range comprising the safe range.

The dedicated onboard monitoring device 10 of the aircraft 1 generates a warning message 3 and transmits the generated warning message 3 to the onboard wireless communication unit 11 of the aircraft 1 during a flight of the aircraft 1, when the suspicious value 31 of the operational parameter of the onboard system 12 of the aircraft 1 is detected. The dedicated onboard monitoring device 10 preferably generates the warning message 3 according to a dedicated protocol.

The generated warning message 3 comprises a unique ID 30 of the onboard system 12 and the detected suspicious value 31 of the operational parameter of the onboard system 12. The generated warning message 3 may additionally comprise a criticality score 32 corresponding to a relevance of the detected suspicious value 31 for a safety of the aircraft 1, the relevance depending on a type of the onboard system 12 and a distance of the detected suspicious value 31 from the predetermined safe range. The generated warning message 3 may also comprise flight data 33 of the aircraft 1.

The onboard wireless communication unit 11 transmits the warning message 3 to an external wireless communication unit 5 using a determined wireless connection. The wireless connection may be determined to be a terrestial connection, a satellite connection or a local WiFi connection.

The wireless connection may be determined to use a radio frequency appropriate for the determined air traffic control instance 42. The onboard wireless communication unit 11 preferably transmits the warning message 3 at a higher priority than messages of passengers of the aircraft 1 and/or via an exclusive radio channel.

The external wireless communication unit 5 forwards the transmitted warning message 3 to a terrestial supporting node 4. The warning message 3 may be forwarded to a server of a manufacturer 40 of the aircraft 1, a server of a manufacturer 41 of the onboard system 12 and/or to a server of a determined air traffic control instance, ATC, 42 as the terrestial supporting node 4. The onboard wireless communication unit 11 advantageously transmits the warning message 3 to a mobile device 2 located within the aircraft 1.

The terrestial supporting node 4 responds to the forwarded warning message 3 depending on the forwarded warning message 3. Responding to the forwarded warning message 3 may comprise remotely accessing the onboard system 12 via the determined wireless connection or providing a crew member of the aircraft 1 with information concerning the suspicious onboard system 12 via the determined wireless connection.

### Reference Numerals

- 1: aircraft
- 10: dedicated onboard monitoring device
- 11: onboard wireless communication unit
- 110: mobile satellite service, MSS, unit
- 111: complementary ground component, CGC, unit
- 112: in-flight connectivity, IFC, unit
- 113: digital service unit, DSU, unit
- 12: onboard system
- 120: engine
- 121: cabin
- 122: landing gear
- 123: wing
- 124: tail unit
- 2: mobile device
- 3: warning message
- 30: ID
- 31: suspicious value
- 32: criticality score
- 33: flight data
- 4: terrestial supporting node
- 40: server of an aircraft manufacturer
- 41: server of an onboard system manufacturer
- 42: air traffic control instance
- 5: external wireless communication unit
- 6: satellite

## Claims

1. A method for safely operating an aircraft (1), wherein
- a dedicated onboard monitoring device (10) of the aircraft (1) generates a warning message (3) and transmits the generated warning message (3) to an onboard wireless communication unit (11) of the aircraft (1), when a suspicious value (31) of an operational parameter of an onboard system (12) of the aircraft (1) is detected during a flight of the aircraft (1), the generated warning message (3) comprising a unique ID (30) of the onboard system (12) and the detected suspicious value (31) of the operational parameter of the onboard system (12);
- the onboard wireless communication unit (11) transmits the warning message (3) to an external wireless communication unit (5) using a determined wireless connection;
- the external wireless communication unit (5) forwards the transmitted warning message (3) to a terrestial supporting node (4);
- the terrestial supporting node (4) responds to the forwarded warning message (3) depending on the forwarded warning message (3).

2. The method according to claim 1, wherein either the onboard system (12) transmits a value of the operational parameter to the dedicated onboard monitoring device (10) and the dedicated onboard monitoring device (10) detects the transmitted value to be suspicious or the onboard system (12) detects a value of the operational parameter to be suspicious and transmits the detected suspicious value (31) to the dedicated onboard monitoring device (10).

3. The method according to claim 1 or 2, wherein the warning message (3) is forwarded to a server of a manufacturer (40) of the aircraft (1), a server of a manufacturer (41) of the onboard system (12) and/or to a server of a determined air traffic control instance, ATC, (42) as the terrestial supporting node (4).

4. The method according to claim 3, wherein the wireless connection is determined to use a radio frequency appropriate for the determined air traffic control instance (42).

5. The method according to one of claims 1 to 4, wherein responding to the forwarded warning message (3) comprises remotely accessing the onboard system (12) via the determined wireless connection or providing a crew member of the aircraft (1) with information concerning the suspicious onboard system (12) via the determined wireless connection.

6. The method according to one of claims 1 to 5, wherein the value (31) is detected to be suspicious when the value (31) is outside a predetermined safe range of normal values of the operational parameter and inside a predetermined non-critical range of abnormal values of the operational parameter, the non-critical range comprising the safe range.

7. The method according to claim 6, wherein the generated warning message (3) comprises a criticality score (32) corresponding to a relevance of the detected suspicious value (31) for a safety of the aircraft (1), the relevance depending on a type of the onboard system (12) and a distance of the detected suspicious value (31) from the predetermined safe range.

8. The method according to one of claims 1 to 7, wherein the dedicated onboard monitoring device (10) generates the warning message (3) according to a dedicated protocol.

9. The method according to one of claims 1 to 8, wherein the generated warning message (3) comprises flight data (33) of the aircraft (1).

10. The method according to one of claims 1 to 9, wherein the onboard wireless communication unit (11) transmits the warning message (3) at a higher priority than messages of passengers of the aircraft (1) and/or via an exclusive radio channel.

11. The method according to one of claims 1 to 10, wherein the wireless connection is determined to be a terrestial connection, a satellite connection or a local WiFi connection.

12. The method according to one of claims 1 to 11, wherein the onboard wireless communication unit (11) transmits the warning message (3) to a mobile device (2) located within the aircraft (1).

13. A dedicated onboard monitoring device (10) for an aircraft (1), configured for carrying out a method according to one of claims 1 to 12 together with an onboard system (12) of the aircraft (1), an onboard wireless communication unit (11) of the aircraft (1), an external wireless communication unit (5) and a terrestial supporting node (4).

14. An aircraft (1), comprising a plurality of onboard aircraft systems (12), an onboard wireless communication unit (11), and a dedicated onboard monitoring device (10) according to claim 13 separate from both each onboard aircraft system (12) and the onboard wireless communication unit (11) and connected to each onboard aircraft system (12) and the onboard wireless communication unit (11).

15. A computer program product, comprising a digital storage medium storing a program code, the program code causing a computing device to carry out a method according to one of claims 1 to 12 as the dedicated onboard monitoring device (10) when being executed by a processor of the computing device.

## Amended claims

### Amended claims in accordance with Rule 137(2) EPC.

1. A method for safely operating an aircraft (1), wherein
- a dedicated onboard monitoring device (10) of the aircraft (1) generates a warning message (3) and transmits the generated warning message (3) to an onboard wireless communication unit (11) of the aircraft (1), when a suspicious value (31) of an operational parameter of an onboard system (12) of the aircraft (1) is detected during a flight of the aircraft (1), the generated warning message (3) comprising a unique ID (30) of the onboard system (12) and the detected suspicious value (31) of an operational parameter of the onboard system (12);
- the onboard wireless communication unit (11) transmits the warning message (3) to an external wireless communication unit (5) using a determined wireless connection;
- the external wireless communication unit (5) forwards the transmitted warning message (3) to a terrestric supporting node (4);
- the terrestric supporting node (4) responds to the forwarded warning message (3) depending on the forwarded warning message (3), wherein responding to the forwarded warning message (3) comprises remotely accessing the onboard system (12) via the determined wireless connection.

2. The method according to claim 1, wherein either the onbard system (12) transmits a value of the operational parameter to the dedicated onboard monitoring device (10) and the dedicated onboard monitoring device (10) detects the transmitted value to be suspicious or the onboard system (12) detects a value of the operational parameter to be suspicious and transmits the detected suspicious value (31) to the dedicated onboard monitoring device (10).

3. The method according to claim 1 or 2, wherein the warning message (3) is forwarded to a server of a manufacturer (40) of the aircraft (1), a server of a manufacturer (41) of the onboard system (12) and/or to a server of a determined air traffic control instance, ATC, (42) as the terrestric supporting node (4).

4. The method according to claim 3, wherein the wireless connection is determined to use a radio frequency appropriate for the determined air traffic control instance (42).

5. The method according to one of claims 1 to 4, wherein responding to the forwarded warning message (3) comprises providing a crew of the aircraft (1) with information concerning the suspicious onboard system (12) via the determined wireless connection.

6. The method according to one of claims 1 to 5, wherein the value (31) is detected to be suspicious when the value (31) is outside a predetermined safe range of normal values of the operational parameter and inside a predetermined non-critical range of abnormal values of the operational parameter, the non-critical range comprising the safe range.

7. The method according to claim 6, wherein the generated warning message (3) comprises a criticality score (32) corresponding to a relevance of the detected suspicious value (31) for a safety of the aircraft (1), the relevance depending on a type of the onboard system (12) and a distance of the detected suspicious value (31) from the predetermined safe range.

8. The method according to one of claims 1 to 7, wherein the dedicated onboard monitoring device (10) generates the warning message (3) according to a dedicated protocol.

9. The method according to one of claims 1 to 8, wherein the generated warning message (3) comprises flight data (33) of the aircraft (1).

10. The method according to one of claims 1 to 9, wherein the onboard wireless communication unit (11) transmits the warning message (3) at a higher priority than messages of passengers of the aircraft (1) and/or via an exclusive radio channel.

11. The method according to one of claims 1 to 10, wherein the wireless connection is determined to be a terrestric connection, a satellite connection or a local WiFi connection.

12. The method according to one of claims 1 to 11, wherein the onboard wireless communication unit (11) transmits the warning message (3) to a mobile device (2) located within the aircraft (1).

13. A dedicated onboard monitoring device (10) for an aircraft (1), configured for carrying out a method according to one of claims 1 to 12 together with an onboard system (12) of the aircraft (1), an onboard wireless communication unit (11) of the aircraft (1), an external wireless communication unit (5) and a terrestric supporting node (4).

14. An aircraft (1), comprising a plurality of onboard aircraft systems (12), an onboard wireless communication unit (11), and a dedicated onboard monitoring device (10) according to claim 13 separate from both each onboard aircraft system (12) and the onboard wireless communication unit (11) and connected to each onboard aircraft system (12) and the onboard wireless communication unit (11).

15. A computer program product, comprising a digital storage medium storing a program code, the program code causing a computing device to carry out a method according to one of claims 1 to 12, together with the onboard system (12) of the aircraft (1), an onboard wireless communication unit (11) of the aircraft (1), the external wireless communication unit (5) and the terrestric supporting node (4), as the dedicated onboard monitoring device (10) of the aircraft (1) when being executed by a processor of the computing device.
